# EUROPÄISCHE PATENTSCHRIFT

(11) **EP 1 874 604 B1**
(45) Veröffentlichungstag und Bekanntmachung des Hinweises auf die Patenterteilung: **11.02.2009**
(21) Anmeldenummer: 06725705.5
(22) Anmeldetag: 11.04.2006
(51) Int. Cl.: B60T 17/18, B60T 13/565, B60T 11/224

(54) **VORRICHTUNG ZUR BREMSBETÄTIGUNG EINES KRAFTFAHRZEUGES**
DEVICE FOR BRAKE APPLICATION IN A MOTOR VEHICLE
DISPOSITIF D'ACTIONNEMENT DES FREINS D'UN VEHICULE

(30) Priorität: 15.04.2005 DE 102005017706; 03.04.2006 DE 102006015850
(43) Veröffentlichungstag der Anmeldung: 09.01.2008
(73) Patentinhaber: Continental Teves AG & Co. oHG, 60488 Frankfurt am Main (DE)
(72) Erfinder: VOGT, Michael, 55469 Simmern (DE); DROTT, Peter, 65936 Frankfurt/Main (DE); KREBS, Stephan, 65760 Eschborn (DE)
(86) Internationale Anmeldenummer: PCT/EP2006/061514
(87) Internationale Veröffentlichungsnummer: WO 2006/108840

(56) Entgegenhaltungen:
- WO-A-99/30948
- DE-A1- 2 450 474

## Beschreibung

Die Erfindung betrifft eine Vorrichtung zur Bremsbetätigung eines Kraftfahrzeuges umfassend einen Hauptzylinder mit einem Gehäuse und einem ersten und einem zweiten in dem Gehäuse verschiebbar angeordneten Kolben, welcher zusammen mit dem Gehäuse jeweils einen ersten und einen zweiten Druckraum begrenzt, der über einen Druckmittelkanal mit einem drucklosen Druckmittelbehälter und über einen Ausgang mit Radbremsen verbindbar ist, und einen pneumatischen Bremskraftverstärker mit einem Verstärkergehäuse, dessen Innenraum durch wenigstens eine bewegliche Wand in wenigstens eine Unterdruckkammer und wenigstens eine Arbeitskammer unterteilt ist, wobei die bewegliche Wand abhängig von einer an einer Kolbenstange wirksamen Pedalkraft eine Kraft auf eine mit dem ersten Kolben des Hauptzylinders verbindbare Druckstange überträgt, wenn die bewegliche Wand unter der Wirkung einer zwischen den beiden Kammern herrschenden Druckdifferenz steht,
wobei einer der Kolben des Hauptzylinders gestuft mit zwei unterschiedlich großen hydraulisch wirksamen Wirkflächen ausgebildet ist und eine Umschaltung der Wirkflächen bei Ausfall des Bremskraftverstärkers mittels einer Ventilanordnung erfolgt.

Ein derartige Vorrichtung zur Bremsbetätigung ist beispielsweise aus der DE 197 56 248 A1 bekannt. Der Hauptzylinder dieser Vorrichtung weist eine Druckkammer und eine Zwischendruckkammer auf, welche bei funktionierendem Bremskraftverstärker mit Radbremsen verbunden sind. Weiter ist eine Einrichtung umfassend ein Ventil vorgesehen, welche die Druckkammer in Abhängigkeit von einem Druck in der Unterdruckkammer mit einer Nachlaufkammer verbindet.
Das Umschalten des Hauptzylinders auf eine kleine Wirkfläche ermöglicht, dass bei einem Ausfall des Bremskraftverstärkers die vom Gesetzgeber festgelegte Bremsverzögerung, in Deutschland beispielsweise 0,3g, eingehalten werden kann. Bei funktionierendem Bremskraftverstärker sorgt eine große Wirkfläche für ein herkömmliches Pedalgefühl, da über die große Wirkfläche ein großes Druckmittelvolumen verschoben werden kann und ein schneller Druckaufbau in Bremskreisen des Fahrzeuges ermöglicht wird.

Speziell bei alltagstauglichen, geländegängigen Fahrzeugen wird es immer schwieriger, einen akzeptablen Kompromiss zwischen der Funktion Unterdruckausfall des Bremskraftverstärkers und einem herkömmlichen Pedalgefühl zu finden.

Ferner sind elektronische Bremssysteme bekannt, welche bei Detektierung eines Unterdruckausfalls eine Hydraulikeinheit zur Unterstützung des Kraftfahrzeugfahrers hinzuschalten. Diese Systeme sind jedoch sehr kostenintensiv.

Aufgabe der vorliegenden Erfindung ist es, eine andere gattungsgemäße Vorrichtung bereitzustellen, welche einen akzeptablen Kompromiss zwischen der Funktion Bremskraftverstärkerausfall und einem herkömmlichen Pedalgefühl ermöglicht.

Eine weitere Aufgabe der Erfindung ist es, eine Druckerhöhung in den Bremskreisen zu ermöglichen, wenn der Bremskraftverstärker seinen Aussteuerpunkt erreicht hat und eine weitere Druckerhöhung notwendig ist (Overboost-Funktion) oder wenn bei einem Kaltstart des Fahrzeuges nicht genügend Unterdruck zur Verfügung steht.

Diese Aufgaben werden erfindungsgemäß dadurch gelöst, dass ein durch den gestuften Kolben und das Gehäuse begrenzter Ringraum mittels der Ventilanordnung entweder mit dem Druckraum, welcher dem gestuften Kolben zugeordnet ist, oder mit einem Druckmittelbehälter verbindbar ist, dass die Ventilanordnung ein erstes und ein zweites Ventil umfasst, welche in Abhängigkeit des Druckes der Arbeitskammer des Bremskraftverstärkers schaltbar sind, und dass das erste Ventil in betätigter Stellung den Druckraum mit dem Ringraum verbindet und das zweite Ventil in betätigter Stellung die Verbindung des Ringraumes zu dem Druckmittelbehälter sperrt. Im Normalbetrieb des Bremskraftverstärkers kann ein kleiner Pedalweg realisiert werden, da durch die große Wirkfläche des gestuften Kolbens ein großes Druckmittelvolumen verschoben wird. Bei einem Ausfall des Bremskraftverstärkers kommt die kleine Wirkfläche des gestuften Kolbens zum Tragen und ermöglicht selbst mit geringen Fußkräften auf das Bremspedal einen hohen Druck in den Bremskreisen. Durch das Schalten der Ventilanordnung in Abhängigkeit des Druckes in der Arbeitskammer des Bremskraftverstärkers können zwei weitere Funktionen (Overboost und Kaltstart-Funktion) realisiert werden, ohne dass zusätzliche Maßnahmen getroffen werden müssen oder zusätzliche Bauteile benötigt werden.

Gemäß einer vorteilhaften Ausführungsform kann ein einfacher Aufbau der Ventilanordnung dadurch erreicht werden, dass das erste Ventil über eine erste Druckmittelleitung mit dem Druckraum und über eine zweite Druckmittelleitung mit dem Ringraum verbunden ist und dass eine dritte Druckmittelleitung vorgesehen ist, über welche der Ringraum mit dem Druckmittelbehälter verbindbar ist, wobei das zweite Ventil in der dritten Druckmittelleitung angeordnet ist und diese von der zweiten Druckmittelleitung abzweigt.

Vorzugsweise ist zur Ansteuerung der Ventile der Ventilanordnung eine Unterdruckdose vorgesehen. Die Ventile können somit mechanisch geschaltet werden und sind nicht von einer Energieversorgung des Fahrzeuges abhängig.

Eine vormontierbare Einheit erhält man dadurch, dass die Ventilanordnung sowie die Unterdruckdose in einer Umschalteinheit integriert vorgesehen sind, wodurch die Montage der Vorrichtung wesentlich vereinfacht werden kann.

Vorzugsweise ist die Umschalteinheit am Hauptzylinder befestigbar. Separate Verbindungsleitungen zwischen Hauptzylinder und Umschalteinheit können dadurch entfallen.

Es ist gemäß einer weiteren vorteilhaften Ausführungsform der Erfindung jedoch ebenso denkbar, dass die Umschalteinheit als separates Bauteil im Motorraum befestigbar ist. Die Befestigung der Umschalteinheit kann dadurch unabhängig von der Bremskraftverstärker-Hauptzylinder-Einheit je nach dem vorhandenen Raumangebot im Motorraum angeordnet werden.

Eine möglichst bauraumoptimierte Ausgestaltung der Umschalteinheit kann dadurch erzielt werden, dass die Ventile in der Umschalteinheit übereinander angeordnet vorgesehen sind. Dabei weist die Umschalteinheit vorzugsweise einen ersten und einen zweiten Gehäuseabschnitt auf, wobei die Unterdruckdose in den ersten Gehäuseabschnitt integriert vorgesehen ist und die Ventile der Ventilanordnung in dem zweiten Gehäuseabschnitt angeordnet sind, und die Unterdruckdose weist eine federvorgespannte Membran aufweist, welche den ersten Gehäuseabschnitt in eine Atmosphärenkammer sowie eine Unterdruckkammer unterteilt.

Gemäß einer vorteilhaften Ausführungsform der Erfindung ist die Membran in einer Wandung des ersten Gehäuseabschnittes sowie in einen Kolben eingespannt vorgesehen, die Ventilanordnung weist einen ersten, formschlüssig mit dem Kolben der Unterdruckdose verbunden Betätigungsstößel für das zweite Ventil und einen zweiten, im Kraftfluss nachgeschalteten Betätigungsstößel des ersten Ventils auf, wobei an dem ersten Betätigungsstößel ein Ventilkörper des zweiten Ventils befestigt ist und ein Vorsprung des zweiten Betätigungsstößels den Ventilkörper des ersten Ventils bildet, und Ventilsitze der Ventile sind in Ausnehmungen des zweiten Gehäuseabschnittes angeordnet.

Gemäß weiteren vorteilhaften Ausführungsformen kann der Hauptzylinder der Vorrichtung als Zentralventil-Tandemhauptzylinder oder in Plunger-Bauweise ausgebildet sein.

Ein erfindungsgemäßes Verfahren zur Wirkflächenänderung einer Vorrichtung zur Bremsbetätigung sieht vor, dass die Umschaltung der Wirkflächen in Abhängigkeit des Druckes der Arbeitskammer des Bremskraftverstärkers erfolgt.

Gemäß einer vorteilhaften Weiterbildung des erfindungsgemäßen Verfahrens, erfolgt das Schalten der Ventilanordnung mittels einer Unterdruckdose.

Nachstehend wird die Erfindung anhand der Zeichnung erläutert, welche Ausführungsbeispiele zeigt. Es zeigt jeweils stark schematisiert:
- Figur 1: ein erstes Ausführungsbeispiel einer erfindungsgemäßen Vorrichtung zur Bremsbetätigung im Längsschnitt;
- Figur 1a: den Hauptzylinder gemäß Fig. 1 in vergrößerter Darstellung;
- Figur 1b: einen Ausschnitt des Bremskraftverstärkers gemäß Fig. 1 in vergrößerter Darstellung;
- Figur 2: ein Kraft-Druck-Diagramm der erfindungsgemäßen Vorrichtung gemäß Fig. 1;
- Figur 3: eine Umschalteinheit der erfindungsgemäßen Vorrichtung zur Bremsbetätigung gemäß Fig. 1 in betätigter Stellung;
- Figur 4: die Umschalteinheit der erfindungsgemäßen Vorrichtung zur Bremsbetätigung gemäß Fig. 1 in unbetätigter Stellung;
- Figur 5: die erfindungsgemäße Vorrichtung zur Bremsbetätigung gemäß den Fig. 1 bis 4 in räumlicher Darstellung und
- Figur 6: einen Hauptzylinder eines zweiten Ausführungsbeispiels einer erfindungsgemäßen Vorrichtung zur Bremsbetätigung im Längsschnitt.

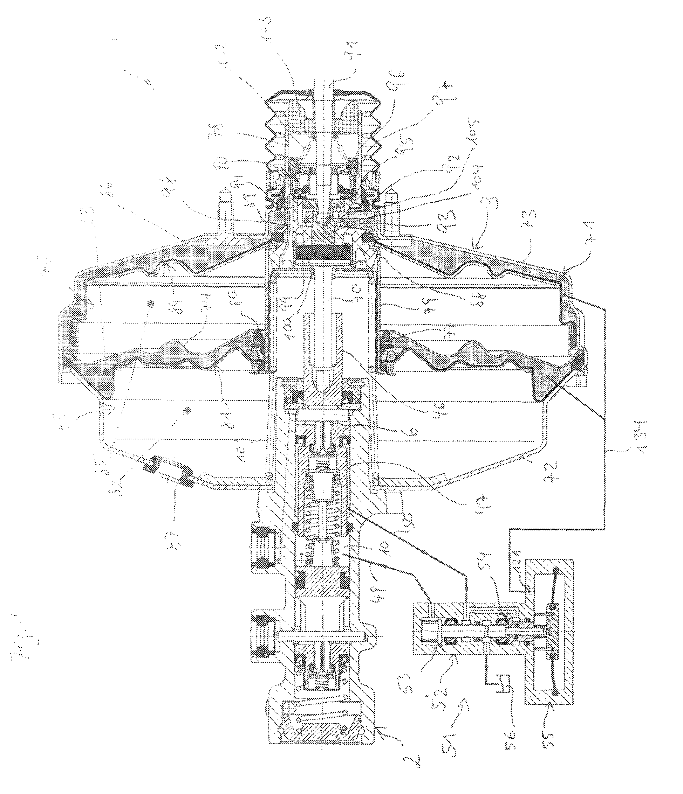

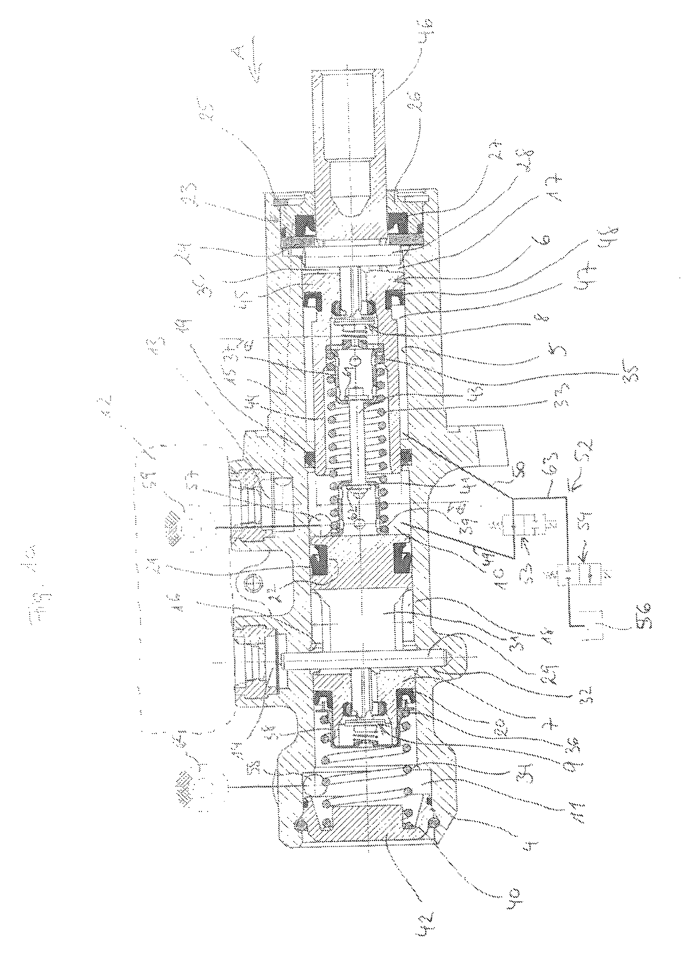

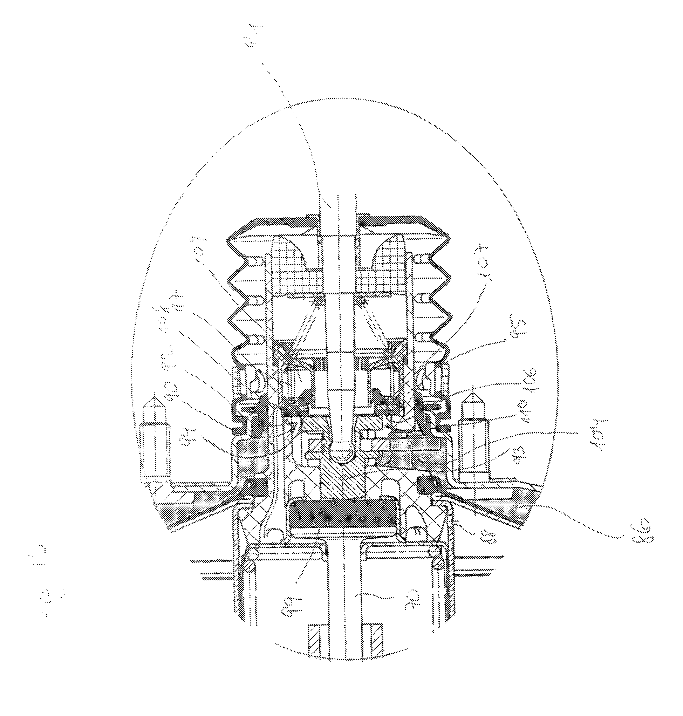

Fig. 1 zeigt ein erstes Ausführungsbeispiel einer erfindungsgemäßen Vorrichtung zur Bremsbetätigung 1 im Längsschnitt, welche einen Hauptzylinder 2 und einen pneumatischen Bremskraftverstärker 3 umfasst.

Der Hauptzylinder 2, der als Zentralventil-Tandemhauptzylinder ausgestaltet ist, ist in Fig. 1a vergrößert dargestellt. Dieser weist in seinem grundsätzlichen Aufbau ein Gehäuse 4 mit einer Längsbohrung 5 für einen ersten Kolben (Druckstangenkolben) 6 und einen zweiten Kolben (Schwimmkolben) 7 auf. Ferner ist je Kolben 6,7 ein Zentralventil 8,9 vorgesehen. Das jeweilige Zentralventil 8,9 wechselwirkt zur Abdichtung eines zugehörigen Druckraumes 10,11 mit dem jeweiligen Kolben 6,7 unter Berücksichtigung eines vorgegebenen Schließweges.

Von einem angedeuteten drucklosen Druckmittelbehälter 12 münden über Verbindungen 13,14 Druckmittelkanäle 15,16 jeweils in Nachlaufräume 17,18, welche mittels Primärdichtmanschetten 19,20 gegenüber den dazugehörigen Druckräumen 10,11 abgedichtet sind. Weiter ist der Nachlaufraum 18 mittels einer Sekundärdichtmanschette 21 gegenüber dem ersten Druckraum 10 abgedichtet, wobei die Sekundärdichtmanschette 21 in einer umlaufenden Nut 22 des zweiten Kolbens 7 angeordnet ist.

Eine im Gehäuse 4 angeordnete Dichtungsanordnung 23 dichtet den Nachlaufraum 17 gegenüber dem Bremskraftverstärker 3 ab. Die Dichtungsanordnung 23 ist auf der dem Druckraum 10 zugewandten Seite von einer Scheibe 24 begrenzt, wobei ein Sicherungselement 25 die Dichtungsanordnung 23 sowie die Scheibe 24 im Gehäuse 4 sichert.

Die Dichtungsanordnung 23 weist einen Führungsring 26, welcher aus Kunststoff besteht und einer verschleißarmen Führung des ersten Kolbens 6 dient, sowie eine auf dem Führungsring 26 in Richtung des ersten Druckraumes 10 angeordnete Sekundärdichtmanschette 27 auf.

Die Zentralventile 8,9 werden in einem unbetätigten Zustand durch als Zylinderstifte ausgebildete Anschläge 28,29 offen gehalten, wobei sich die Anschläge 28,29 durch schlitzförmige Ausnehmungen 30,31 der Kolben 6,7 erstrecken. Der Anschlag 28 ist in der Längsbohrung 5 angeordnet, wobei er an der Scheibe 24 anschlägt. Dagegen ist der Anschlag 29 in einer Gehäusebohrung 32 des Gehäuses 4 fixiert und die schlitzförmige Ausnehmung 31 des zweiten Kolbens 7 ist in einem Bereich zwischen der Primärdichtmanschette 20 und der Sekundärdichtmanschette 21 angeordnet.

Jedem der Kolben 6,7 ist eine Rückstellfeder 33,34 zugeordnet, welche mit einem ersten Ende 35,36 an einer ersten Hülse 37,38 und mit einem zweiten Ende 39,40 an einer zweiten Hülse 41 bzw. an einem Gehäusedeckel 42 abgestützt ist. Die erste Hülse 37,38 der Rückstellfeder 33,34 stützt sich dabei an dem Kolben 6,7 ab. Wie aus Fig. 1 a ersichtlich ist, ist die Rückstellfeder 33 mittels der beiden Hülsen 37,41 und eines zylindrischen Stiftes 43 gefesselt vorgesehen. Die beiden Hülsen 37,41 und der Stift 43 sind mittels an dem Stift 43 ausgebildeter Anschläge 61,62 begrenzt teleskopierbar und bewirken im unbetätigten Zustand eine elastische Vorspannung der Rückstellfeder 33.
Bei Kolbenverschiebung in eine Betätigungsrichtung A wird die Rückstellfeder 33,34 komprimiert und zwecks Kolbenrückstellung expandiert.

Der erste Kolben 6 ist gestuft ausgebildet und weist einen ersten, dem ersten Druckraum 10 zugewandten Kolbenabschnitt 44 mit einer ersten, kleinen hydraulisch wirksamen Wirkfläche A1, einen zweiten, mittleren Kolbenabschnitt 45 mit einer zweiten, großen hydraulisch wirksamen Wirkfläche A2 und einen dritten Kolbenabschnitt 46 auf. Der dritte Kolbenabschnitt 46 dient der Verbindung des ersten Kolbens 6 mit einer Druckstange 70 des Bremskraftverstärkers 3, wie aus Fig. 1 ersichtlich ist.

Der erste und der zweite Kolbenabschnitt 44,45 begrenzen mit dem Gehäuse 4 einen Ringraum 47, welcher mit einer weiteren Dichtmanschette 48 gegenüber dem Nachlaufraum 17 abgedichtet ist. Die Dichtmanschette 48 ist in Richtung Ringraum 47 überströmbar.

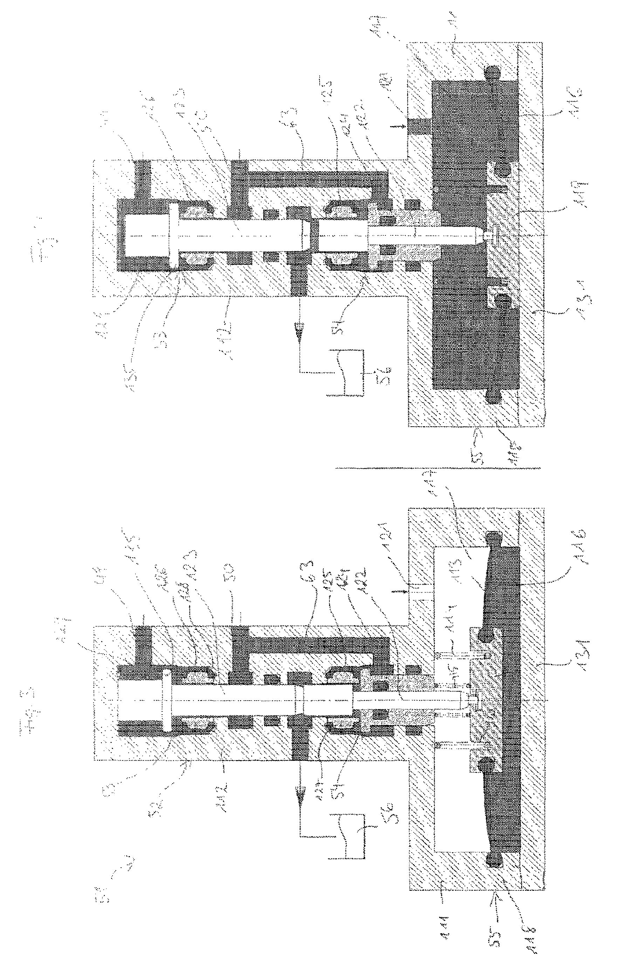

Weiter ist Fig. 1 zu entnehmen, dass der erste Druckraum 10 und der Ringraum 47 über eine erste und eine zweite Druckmittelleitung 49,50 mit einer Umschalteinheit 51 verbunden sind. Die Umschalteinheit 51 ist in den Fig. 3 und 4 vergrößert dargestellt und Aufbau und Funktion werden nachstehend noch näher erläutert. Sie umfasst eine Ventilanordnung 52 mit einem ersten und einem zweiten mechanisch betätigbaren Ventil 53,54 sowie eine Unterdruckdose 55.

Der Ringraum 47 ist mittels der Ventilanordnung 52, welche in Abhängigkeit des Druckes einer oder zweier Arbeitskammern 83,86 des Bremskraftverstärkers 3 schaltbar ist, entweder mit dem ersten Druckraum 10 oder mit einem separaten Druckmittelbehälter 56 verbindbar. Im Rahmen der Erfindung ist es ebenso denkbar, dass der Ringraum 47 auch mit dem Druckmittelbehälter 12 verbindbar ist, wodurch der separate Druckmittelbehälter 56 entfallen kann.

Dabei verbindet das erste Ventil 53 in betätigter Stellung den Druckraum 10 mit dem Ringraum 47 und das zweite Ventil 54 sperrt in betätigter Stellung die Verbindung des Ringraumes 47 zu dem Druckmittelbehälter 56.

Die Funktionsweise des Zentralventil-Tandem-Hauptzylinders 2 ist grundsätzlich bekannt. Bei Betätigen eines nicht dargestellten Bremspedals wird der erste Kolben 6 über die Druckstange 70 des Bremskraftverstärkers 3 in Betätigungsrichtung A nach links verschoben. Durch diese Linearbewegung des ersten Kolbens 6 schließt das zugehörige Zentralventil 8, welches in der gezeigten, unbetätigten Stellung durch den Anschlag 28 offen gehalten wird, so dass der korrespondierende Druckraum 10 gegenüber seiner Verbindung 13 über den Druckmittelkanal 15 und den Nachlaufraum 17 zu dem Druckmittelbehälter 12 abgeschlossen ist. In Folge des sich hierdurch aufbauenden hydrostatischen Druckes im Druckraum 10 wird der zweite Kolben 7 synchron mit dem ersten Kolben 6 in Betätigungsrichtung A bewegt und schließt im zugehörigen Bremskreis sein Zentralventil 9. Nun baut sich in gleicher Weise in diesem Bremskreis hydraulischer Druck auf, weil der dortige Druckraum 11 gegenüber seiner Verbindung 14 über den Druckmittelkanal 16 und den Nachlaufraum 18 zum Druckmittelbehälter 12 verschlossen ist. Folglich herrscht in beiden Druckräumen 10,11 praktisch gleicher Hydraulikdruck, der sich auf über Ausgänge 57,58 auf Radbremsen 59,60 überträgt.

Der in Fig. 1 und in Fig. 1b gezeigte pneumatische Bremskraftverstärker 3 ist als Tandembremskraftverstärker ausgebildet und umfasst ein Verstärkergehäuse 71, das zwei schalenförmige Verstärkergehäusehälften oder Gehäusehalbschalen 72,73 aufweist, die vorzugsweise mit Hilfe von umformtechnischen Maßnahmen miteinander verpresst sind.
Dabei ist der Bremskraftverstärker 3 nicht zwingend in TandemAusführung vorgesehen und kann auch als Single-Gerät ausgebildet sein.

Der Innenraum des Verstärkergehäuses 71 wird mit Hilfe einer in etwa mittig angeordneten, ortsfesten Trennwand 74 in einen vorderen, hauptzylinderseitigen Verstärkerraum 75 sowie einen hinteren, bremspedalseitigen Verstärkerraum 76 aufgeteilt,
wobei die Trennwand 74 eine mittig angeordnete, kreisförmige Ausnehmung 77 aufweist, welche von einem Steuergehäuse 78 bzw. dessen zylindrischen Verlängerung 79 durchgriffen ist, und die Trennwand 74 mittels eines Dichtelementes 80 dichtend an der Verlängerung 79 anliegt.

Der vordere Verstärkerraum 75 wird durch eine erste bewegliche Wand 81 in eine erste Unterdruckkammer 82 konstanten Druckes und in eine erste Arbeitskammer 83 veränderlichen Druckes und der hintere Verstärkerraum 76 durch eine zweite bewegliche Wand 84 in eine zweite Unterdruckkammer 85 und eine zweite Arbeitskammer 86 unterteilt. Üblicherweise ist die vordere Gehäusehalbschale 72 mit einem Unterdruckanschluss 87 versehen, mittels dessen die erste Unterdruckkammer 82 an eine geeignete Unterdruckquelle, beispielsweise einen Ansaugkrümmer des Kraftfahrzeugmotors, oder an eine Unterdruckpumpe angeschlossen werden kann. Die Verbindung der beiden Unterdruckkammern 82,85 erfolgt über Ausnehmungen 88 in der zylindrischen Verlängerung 79 des Steuergehäuses 78.

Die hintere Gehäusehalbschale 73 ist mit einem axialen Abschnitt 89 kleineren Durchmessers versehen, in dem das Steuergehäuse 78 axial bewegbar, abgedichtet geführt ist. Im Inneren des Steuergehäuses 78 ist ein Steuerventil 90 vorgesehen, das eine kontrollierte Belüftung der beiden Arbeitskammern 83,86 ermöglicht und dadurch die Druckdifferenz zwischen den Unterdruckkammern 82,85 und den Arbeitskammern 83,86 steuert.

Das Steuerventil 90 ist durch eine Kolbenstange 91 betätigbar und besteht aus einem am Steuergehäuse 78 ausgebildeten ersten Dichtsitz 92, einem, an einem mit der Kolbenstange 91 verbundenen Ventilkolben 93 ausgebildeten zweiten Dichtsitz 94 sowie einem mit beiden Dichtsitzen 92,94 zusammenwirkenden Ventilkörper 95, der mittels einer sich an einem Führungselement 96 abstützenden Ventilfeder 97 gegen die Dichtsitze 92,94 gedrückt wird. Die zweite Arbeitskammer 86 ist mit der ersten Unterdruckkammer 82 über einen seitlich im Steuergehäuse 78 verlaufenden Kanal 98 verbindbar. Die Kolbenstange 91 ist mit einem nicht dargestellten Bremspedal verbunden.

Die Bremskraft wird über eine stirnseitig am Steuergehäuse 78 anliegende gummielastische Reaktionsscheibe 99 sowie die, einen Kopfflansch 100 aufweisende Druckstange 70 auf den ersten Kolben 6 des Hauptzylinders 2 der Bremsanlage übertragen, der am unterdruckseitigen Ende des Bremskraftverstärkers 3, d.h. an der vorderen Gehäusehalbschale 72 angebracht ist. Die an der Kolbenstange 91 eingeleitete Eingangskraft wird auf die Reaktionsscheibe 99 mittels des Ventilkolbens 93 übertragen.

Eine schematisch dargestellte Rückstellfeder 101, die sich an der unterdruckseitigen Stirnwand des Verstärkergehäuses 71 abstützt, hält die beweglichen Wände 81,84 in der gezeigten Ausgangsstellung. Außerdem ist eine Rückholfeder 102 vorgesehen, die zwischen einem, an der Kolbenstange 91 angeordneten Halteelement 103 und dem Führungselement 96 angeordnet ist und deren Kraft für eine Vorspannung des Ventilkolbens 93 bzw. seines Ventilsitzes 94 gegenüber dem Ventilkörper 95 sorgt.

Um die zweite Arbeitskammer 86 bei der Betätigung des Steuerventils 90 mit der Atmosphäre verbinden zu können, ist schließlich im Steuergehäuse 78 ein annähernd radial verlaufender Kanal 104 ausgebildet. Die Rückkehrbewegung des Ventilkolbens 93 am Ende eines Bremsvorganges wird durch ein Querglied 105 begrenzt, das in der in der Zeichnung gezeigten Lösestellung des Bremskraftverstärkers 3 an dem Verstärkergehäuse 71 anliegt.

Wie insbesondere aus dem in Fig. 1b dargestellten vergrößerten Ausschnitt des Bremskraftverstärkers 3 hervorgeht, weist der Ventilkörper 95 weist eine mit den beiden Dichtsitzen 92,94 zusammenwirkende ringförmige Dichtfläche 106 auf, die mittels einer metallischen Versteifungsscheibe 107 versteift ist und mit mehreren axialen Durchlässen 108 versehen ist.

Im Steuergehäuse 78 ist ein pneumatischer Raum 109 begrenzt. Die durch die Durchlässe 108 gebildeten, näher nicht bezeichneten Strömungskanäle verbinden den pneumatischen Raum 109 mit einem durch die Dichtsitze 92,94 begrenzten Ringraum 110, in dem der oben erwähnte pneumatische Kanal 104 mündet, so dass der, auf der der Dichtfläche 106 abgewandten Seite des Ventilkörpers 95 ausgebildete pneumatische Raum 109 ständig mit der zweiten Arbeitskammer 86 in Verbindung steht und am Ventilkörper 95 ein Druckausgleich stattfindet.

Wie allgemein bekannt ist, befindet sich in der gezeigten Lösestellung des Bremskraftverstärkers 3 sowie in einer Teilbremsstellung in den Arbeitskammern 83,86 Unterdruck. Somit bleiben die Ventile 53,54 der Ventilanordnung 52 betätigt, da dem Bremskraftverstärker 3 genügend Unterdruck zur Verfügung steht. Der Ringraum 47 ist über die Druckmittelleitungen 49,50 und das Ventil 53 mit dem Druckraum 10 verbunden, wodurch die große Wirkfläche A2 des ersten Kolbens 6 hydraulisch wirksam ist. Diese sorgt für ein herkömmliches Pedalgefühl, da ein großes Druckmittelvolumen verschoben werden kann und ein schneller Druckaufbau in Bremskreisen des Fahrzeuges ermöglicht wird. Das zweite Ventil 54, das in einer weiteren, dritten Druckmittelleitung 63 angeordnet ist, sperrt in der betätigten Stellung die Verbindung des Ringraumes 47 zu dem Druckmittelbehälter 56. Wie insbesondere aus Fig. 1a ersichtlich ist, welche lediglich die Ventile 53,54 als hydraulische Schaltbilder zeigt, zweigt die Druckmittelleitung 63 von der Druckmittelleitung 50 ab.

Die Umschalteinheit 51 ermöglicht eine Umschaltung des Hauptzylinders 2 von der großen Wirkfläche A2 auf die kleine Wirkfläche A1, wenn bei einem Ausfall des Bremskraftverstärkers 3 in den Arbeitskammern 83,86 kein oder nicht genügend Unterdruck zur Verfügung steht.

Da das Schalten der Ventilanordnung 52 in Abhängigkeit von dem Druck in den Arbeitskammern 83,86 erfolgt, kann nicht nur bei Ausfall des Bremskraftverstärkers 3 auf die kleine Wirkfläche A1 geschaltet werden, sondern auch wenn dem Bremskraftverstärkers 3 bei einem Kaltstart noch nicht genügend Unterdruck zur Verfügung steht. Ferner kann eine Overboost-Funktion realisiert werden, d.h. ein weiterer Druckaufbau, wenn ein Aussteuerpunkt P des Bremskraftverstärkers 3 erreicht ist, und keine Verstärkung der Eingangskraft mittels des Bremskraftverstärkers 3 möglicht ist. Im Aussteuerpunkt P ist ein weiterer Druckaufbau bei der bekannten Vorrichtung nur durch eine gleich hohe Steigung der Eingangskraft möglich. Diese Funktionen können ohne zusätzliche Maßnahmen oder zusätzliche Bauteile verwirklicht werden.

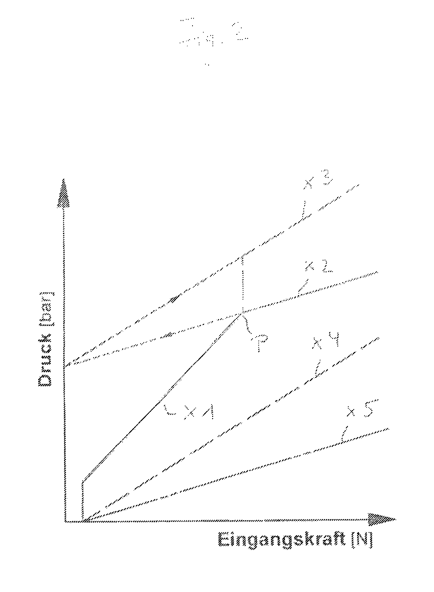

Fig. 2 ist ein Kraft-Druck-Diagramm der erfindungsgemäßen Vorrichtung gemäß Fig. 1 zu entnehmen. Dabei zeigt eine Linie x1 die Kennlinie des Hauptzylinder 2 bis zum Aussteuerpunkt P. Bis zum Aussteuerpunkt P stimmt die Kennlinie x1 mit einer Kennlinie eines konventionellen Hautzylinders ohne Umschaltmöglichkeit bei ausreichendem Unterdruck des Bremskraftverstärkers überein. Über den Aussteuerpunkt P hinaus trennen sich die Kennlinien und der Hauptzylinder 2 der erfindungsgemäßen Vorrichtung gemäß Fig. 1 zeigt eine wesentliche Drucksteigerung im Vergleich zu einem konventionellen Hauptzylinder wie aus den Linien x2 und x3 hervorgeht. Die Linie x3 stellt also die Overboost-Funktion des beschriebenen Hauptzylinders 2 dar.

Die Linien x4 und x5 zeigen Kennlinien eines Hauptzylinders 2 gemäß Fig. 1 und eines konventionellen Hauptzylinders bei einem Ausfall des Unterdruckes (Failed-boost). Wie aus der Kennlinie x4 ersichtlich ist, kann in diesem Fall durch die Umschaltung des Hauptzylinders 2 auf die kleine Wirkfläche A1 im Vergleich zur Kennlinie x5 eines konventionellen Hauptzylinders eine wesentliche Drucksteigerung erreicht werden.

Die Fig. 3 und 4 zeigen schematisch die Umschalteinheit 51 der erfindungsgemäßen Vorrichtung in betätigter und in unbetätigter Stellung.

Die Umschalteinheit 51 weist einen ersten und einen zweiten Gehäuseabschnitt 111,112 aufweist, wobei die Unterdruckdose 55 in den ersten Gehäuseabschnitt 111 integriert vorgesehen ist und die Ventile 53,54 der Ventilanordnung 52 übereinander in dem zweiten Gehäuseabschnitt 112 angeordnet sind. Die Unterdruckdose 55 weist eine mittels einer oder mehreren Federn 114,115 vorgespannte Membran 113 aufweist, welche den ersten Gehäuseabschnitt 111 in eine Atmosphärenkammer 116 sowie eine Unterdruckkammer 117 unterteilt.

Wie ersichtlich ist, ist die Membran 113 in einer Wandung 118 des ersten Gehäuseabschnittes 111 sowie in einen Kolben 119 eingespannt vorgesehen, wobei die Federn 114,115 zur Vorspannung der Membran 113 an dem Kolben 119 anliegen bzw. in einer Ausnehmung 120 des Kolbens 119 angeordnet sind.
Die Unterdruckkammer 117 weist einen Ausgang 121 auf, welcher mittels einer pneumatischen Leitung 134 mit den Arbeitskammern 83,86 des Bremskraftverstärkers 3 verbunden ist (siehe Fig.1).

Die Ventilanordnung 52 umfasst einen ersten, formschlüssig mit dem Kolben 119 der Unterdruckdose 55 verbunden Betätigungsstößel 122 für das zweite Ventil 54 und einen zweiten, im Kraftfluss nachgeschalteten Betätigungsstößel 123 des ersten Ventils 53. Weiter ist an dem ersten Betätigungsstößel 122 ein Ventilkörper 124 des zweiten Ventils 54 befestigt und der zweite Betätigungsstößel 123 bildet mit einem Vorsprung 135 den Ventilkörper des ersten Ventils 53. Ventilsitze 125,126 der Ventile 53,54 sind in entsprechenden Ausnehmungen 127,128 im zweiten Gehäuseabschnitt 112 angeordnet. Der zweite Betätigungsstößel 123 ist mittels einer weiteren Feder 129, die an dem Vorsprung 135 anliegt, in unbetätigter Stellung gegen den Ventilsitz 126 vorgespannt.

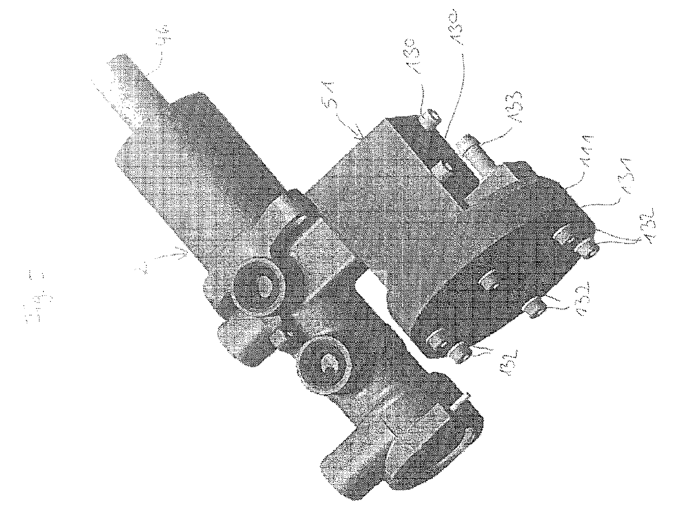

Ferner ist der erste Gehäuseabschnitt 111 mittels eines Deckels 131 verschließbar, wie insbesondere Fig. 5 zu entnehmen ist.

Aus Fig. 3 ist ersichtlich, dass die Ventile 53,54 in betätigter Stellung eine Verbindung des Druckraums 10 mit dem Ringraum 47 über die Druckmittelleitungen 49,50 ermöglichen und eine Verbindung des Ringraumes 47 mit dem Druckmittelbehälter 56 sperren, da dem Bremskraftverstärker 3 ausreichend Unterdruck zu Verfügung steht und sich somit in der Unterdruckkammer 117 der Unterdruckdose 55 Unterdruck befindet.

Durch die Druckdifferenz zwischen Atmosphärenkammer 116 und Unterdruckkammer 117 wird der Kolben 119 entgegen der Federkraft der Federn 114,115 in Richtung Ventilanordnung 52 verschoben und betätigt damit die Ventile 53,54. Das zweite Ventil 54 ist in der betätigten Stellung geschlossen und sperrt die Verbindung des Ringraumes 47 zum Druckmittelbehälter 56. Das erste Ventil 53 wird durch die Verschiebung des ersten Betätigungsstößels 122 ebenfalls betätigt und öffnet durch Abheben des Vorsprunges 135 vom Ventilsitz 126 die Verbindung zwischen Ringraum 47 und Druckraum 10.

Fig. 4 zeigt die Ventilanordnung 52 in unbetätigter Stellung, wenn sich in der Unterdruckkammer 117 durch fehlenden Unterdruck im Bremskraftverstärker 3 oder durch Erreichen des Aussteuerpunktes P Atmosphäre befindet. Aufgrund des gleichen Druckes in Atmosphärenkammer 116 und Unterdruckkammer 117 wird der Kolben 119 durch die Federkraft der Federn 114,115 in eine der Ventilanordnung 52 entgegen gesetzte Richtung gedrückt. Der Ventilkörper 124 des zweiten Ventils 54 bewegt sich ebenfalls in diese Richtung und hebt daher von dem Ventilsitz 125 ab, wodurch die Verbindung des Ringraumes 47 über die Druckmittelleitung 63 zum Druckmittelbehälter 56 freigegeben wird. Das erste Ventil 53 wird geschlossen, da der zweite Betätigungsstößel 123 nicht mehr von dem ersten Betätigungsstößel 122 gegen die Federkraft der Feder 129 in der Zeichnung nach oben gedrückt wird. Damit ist die Verbindung zwischen Ringraum 47 und Druckraum 10 unterbrochen und es ist die kleine Wirkfläche A1 des Hauptzylinders 2 wirksam.

Fig. 5 zeigt den Hauptzylinder 2 sowie die Umschalteinheit 51 der vorstehend beschriebenen erfindungsgemäßen Vorrichtung zur Bremsbetätigung 1 in räumlicher Darstellung. Es ist ersichtlich, dass die Umschalteinheit 51 an den Hauptzylinder 2 angeordnet werden kann. Dadurch sind keine separaten Verbindungsleitungen zwischen dem Hauptzylinder 2 und der Umschalteinheit 51 notwendig, welche im Motorraum verlegt werden müssen und die für Beschädigungen anfällig sind. Die Umschalteinheit 51 ist, wie ersichtlich, mittels Schrauben 130 an dem Gehäuse 4 des Hauptzylinders 2 befestigt.

Ferner ist aus Fig. 5 zu entnehmen, dass der erste Gehäuseabschnitt 111 der Umschalteinheit 51 mit dem Deckel 131 verschlossen ist, der mittels Schrauben 132 an der Wandung 118 des ersten Gehäuseabschnittes 111 befestigt ist. In dem in Fig. 3 und 4 gezeigten Ausgang 121 der Unterdruckkammer 117 ist ein Anschluss 133 zur Befestigung der pneumatischen Leitung 134 vorgesehen, welche die Arbeitskammern 83,86 des Bremskraftverstärkers 3 und die Unterdruckkammer 117 der Unterdruckdose 55 verbindet.

Es ist im Rahmen der Erfindung jedoch ebenfalls denkbar, die Umschalteinheit 51 separat im Motorraum unabhängig von dem Hauptzylinder 2 der Vorrichtung 1 anzuordnen und zu befestigen.

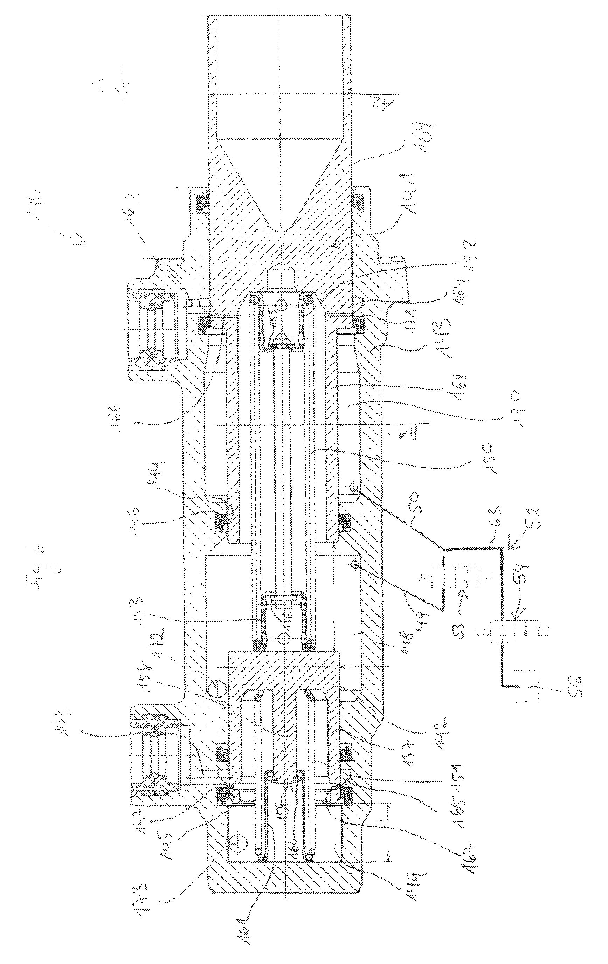

Fig. 6 zeigt einen Hauptzylinder eines zweiten Ausführungsbeispiels einer erfindungsgemäßen Vorrichtung zur Bremsbetätigung im Längsschnitt. Die Vorrichtung zur Bremsbetätigung 1 unterscheidet sich lediglich in der Ausgestaltung des Hauptzylinders, so dass nachfolgend nur dieser beschrieben wird.

Wie ersichtlich ist, ist der Hauptzylinder 140 gemäß Fig. 6 vom sogenannten Plunger-Typ mit einem ersten und einem zweiten topfförmigen Kolben 141,142 sowie mit ortsfest in einem Gehäuse 143 angeordneten, und an den Kolben 141,142 mit einer Dichtlippe 144,145 anliegenden Dichtmanschetten 146,147 zur Abdichtung eines ersten und eines zweiten Druckraumes 148,149. Die Dichtlippen 144,145 können in Richtung Druckraum 148,149 überströmt werden, falls sich ein Druckgefälle zwischen dem in Fig. 1a gezeichneten Druckmittelbehälter 12 und Radbremsen 59,60 eingestellt. Für den unbetätigten Betriebszustand wird ferner zwischen den beiden Druckräumen 148,149 eine druckausgleichende Verbindung ermöglicht, so dass für diesen unbetätigten Betriebszustand auch zwischen den beiden Bremskreisen ein genereller Druckausgleich besteht.

Jedem der Kolben 141,142 ist eine Rückstellfeder 150,151 zugeordnet, die bei einer Kolbenverschiebung in die Betätigungsrichtung A komprimiert und zwecks Kolbenrückstellung expandiert wird. Wie ersichtlich ist, ist die Rückstellfeder 150 des ersten Kolbens 141 mittels zwei Hülsen 152,153 und eines zylindrischen Stiftes 154 gefesselt vorgesehen, wobei die beiden Hülsen 152,153 und der Stift 154 mittels an dem Stift 154 ausgebildeten Anschläge 155,156 begrenzt teleskopierbar sind und im unbetätigten Zustand eine elastische Vorspannung der Rückstellfeder 150 bewirken.

Der zweite Kolben 142 verfügt über eine topfförmige Wandung 157, die mittig von einem zentrischen Zapfen 158 durchragt wird, der vor seinem axialen Austritt aus der Wandung 157 endet. Dieses Ende 159 ist mit einem Anschlag 160 für eine Hülse 161 versehen, wodurch die Hülse 161 relativ zu dem Zapfen 158 begrenzt teleskopierbar ist. Mit anderen Worten wird die Hülse 161 mit der Rückstellfeder 151 bei Betätigung in das Kolbeninnere gedrängt. Wie zu ersehen ist, handelt es sich bei dem Anschlag 160 vorzugsweise um eine, an den Zapfen 158 angenietete - insbesondere Taumelvernietete - Ringscheibe.

Die Druckräume 148,149 sind in dem dargestellten unbetätigten Zustand des Hauptzylinders 140 über Druckmittelkanäle 162,163 und Nachlaufräume 164,165 im Gehäuse 143 sowie über Querbohrungen 166,167 in den topfförmigen Kolben 141,142 mit dem Druckmittelbehälter 12 verbunden.

Zur Betätigung des Hauptzylinders 1 wird der erste Kolben 2 in Betätigungsrichtung A verschoben. Dabei wird die Bewegung des ersten Kolbens 141 über die Rückstellfeder 150 auf den zweiten Kolben 142 übertragen. Sobald sich die Querbohrungen 166,167 im Bereich der Dichtmanschette 146,147 befinden, ist der sogenannte Leerweg des Hauptzylinders 1 durchfahren, da kein Druckmittel mehr von den Nachlaufräumen 164,165 durch die Querbohrungen 166,167 in die Druckräume 148,149 gelangen kann. Die Verbindung der Druckräume 148,149 mit dem Druckmittelbehälter 12 ist unterbrochen und in den Druckräumen 148,149 wird Druck aufgebaut, der sich auf über Ausgänge 172,173 auf die nicht gezeigten Radbremsen 59,60 überträgt.

Der erste Kolben 141 ist gestuft ausgebildet und weist einen ersten, dem ersten Druckraum 148 zugewandten Kolbenabschnitt 168 mit einer ersten, kleinen hydraulisch wirksamen Wirkfläche A1 und einen zweiten, großen Kolbenabschnitt 169 mit einer zweiten, großen hydraulisch wirksamen Wirkfläche A2 auf. Der zweite Kolbenabschnitt 169 dient der Verbindung des ersten Kolbens 141 mit einer Druckstange 70 des Bremskraftverstärkers 3 gemäß Fig. 1.

Der erste und der zweite Kolbenabschnitt 168,169 begrenzen mit dem Gehäuse 143 einen Ringraum 170, welcher mit einer weiteren Dichtmanschette 171 gegenüber dem Nachlaufraum 164 abgedichtet ist. Die Dichtmanschette 171 ist in Richtung Ringraum 170 überströmbar.

Analog zum ersten Ausführungsbeispiel gemäß den Fig. 1 bis 4 ist der erste Druckraum 148 und der Ringraum 170 über die erste und die zweite Druckmittelleitung 49,50 mit der Umschalteinheit 51 verbunden sind, wobei die Ventile 53,54 der Ventilanordnung 52 lediglich schematisch als Schaltbilder dargestellt sind. Die Umschalteinheit 51 ist in den Fig. 3 und 4 dargestellt und wurde bereits näher erläutert, so dass auf eine wiederholte Beschreibung verzichtet wird.

Wie bereits zum ersten Ausführungsbeispiel ausführlich beschrieben wurde, ist der Ringraum 170 mittels der Ventilanordnung 52, welche in Abhängigkeit des Druckes der Arbeitskammern 83,86 des Bremskraftverstärkers 3 schaltbar ist, entweder mit dem ersten Druckraum 148 oder mit dem separaten Druckmittelbehälter 56 verbindbar. Dabei verbindet das erste Ventil 53 in betätigter Stellung den Druckraum 148 mit dem Ringraum 170 und das zweite Ventil 54 sperrt in betätigter Stellung die Verbindung des Ringraumes 170 zu dem Druckmittelbehälter 56.

Die Umschalteinheit 51 ermöglicht eine Umschaltung des Hauptzylinders 140 von der großen Wirkfläche A2 auf die kleine Wirkfläche A1, wenn bei einem Ausfall des Bremskraftverstärkers 3 in den Arbeitskammern 83,86 kein oder nicht genügend Unterdruck zur Verfügung steht (Kaltstart), bzw. wenn der Aussteuerpunkt P des Bremskraftverstärkers 3 erreicht ist und ein weiterer Druckaufbau notwendig ist (Overboost-Funktion).

Das in Fig. 2 dargestellte Kraft-Druck-Diagramm ist gleichermaßen auch für den Hauptzylinder 140 in Plunger-Bauweise gültig.

### Bezugszeichenliste

- 1: Vorrichtung zur Bremsbetätigung
- 2: Hauptzylinder
- 3: Bremskraftverstärker
- 4: Gehäuse
- 5: Längsbohrung
- 6: Kolben
- 7: Kolben
- 8: Zentralventil
- 9: Zentralventil
- 10: Druckraum
- 11: Druckraum
- 12: Druckmittelbehälter
- 13: Verbindung
- 14: Verbindung
- 15: Druckmittelkanal
- 16: Druckmittelkanal
- 17: Nachlaufraum
- 18: Nachlaufraum
- 19: Primärmanschette
- 20: Primärmanschette
- 21: Sekundärdichtmanschette
- 22: Nut
- 23: Dichtungsanordnung
- 24: Scheibe
- 25: Sicherungselement
- 26: Führungsring
- 27: Sekundärdichtmanschette
- 28: Anschlag
- 29: Anschlag
- 30: Ausnehmung
- 31: Ausnehmung
- 32: Gehäusebohrung
- 33: Rückstellfeder
- 34: Rückstellfeder
- 35: Ende
- 36: Ende
- 37: Hülse
- 38: Hülse
- 39: Ende
- 40: Ende
- 41: Hülse
- 42: Gehäusedeckel
- 43: Stift
- 44: Kolbenabschnitt
- 45: Kolbenabschnitt
- 46: Kolbenabschnitt
- 47: Ringraum
- 48: Dichtmanschette
- 49: Druckmittelleitung
- 50: Druckmittelleitung
- 51: Umschalteinheit
- 52: Ventilanordnung
- 53: Ventil
- 54: Ventil
- 55: Unterdruckdose
- 56: Druckmittelbehälter
- 57: Ausgang
- 58: Ausgang
- 59: Radbremse
- 60: Radbremse
- 61: Anschlag
- 62: Anschlag
- 63: Druckmittelleitung

- 70: Druckstange
- 71: Verstärkergehäuse
- 72: Gehäusehalbschale
- 73: Gehäusehalbschale
- 74: Trennwand
- 75: Verstärkerraum
- 76: Verstärkerraum
- 77: Ausnehmung
- 78: Steuergehäuse
- 79: Verlängerung
- 80: Dichtelement
- 81: bewegliche Wand
- 82: Unterdruckkammer
- 83: Arbeitskammer
- 84: bewegliche Wand
- 85: Unterdruckkammer
- 86: Arbeitskammer
- 87: Unterdruckanschluss
- 88: Ausnehmung
- 89: Abschnitt
- 90: Steuerventil
- 91: Kolbenstange
- 92: Dichtsitz
- 93: Ventilkolben
- 94: Dichtsitz
- 95: Ventilkörper
- 96: Führungselement
- 97: Ventilfeder
- 98: Kanal
- 99: Reaktionsscheibe
- 100: Kopfflansch
- 101: Rückstellfeder
- 102: Rückholfeder
- 103: Halteelement
- 104: Kanal
- 105: Querglied

- 106: Dichtfläche
- 107: Versteifungsscheibe
- 108: Durchlass
- 109: Raum
- 110: Ringraum
- 111: Gehäuseabschnitt
- 112: Gehäuseabschnitt
- 113: Membran
- 114: Feder
- 115: Feder
- 116: Atmosphärenkammer
- 117: Unterdruckkammer
- 118: Wandung
- 119: Kolben
- 120: Ausnehmung
- 121: Ausgang
- 122: Betätigungsstößel
- 123: Betätigungsstößel
- 124: Ventilkörper
- 125: Ventilsitz
- 126: Ventilsitz
- 127: Ausnehmung
- 128: Ausnehmung
- 129: Feder
- 130: Schraube
- 131: Deckel
- 132: Schraube
- 133: Anschluss
- 134: Leitung
- 135: Vorsprung

- 140: Hauptzylinder
- 141: Kolben
- 142: Kolben
- 143: Gehäuse
- 144: Dichtlippe
- 145: Dichtlippe
- 146: Dichtmanschette
- 147: Dichtmanschette
- 148: Druckraum
- 149: Druckraum
- 150: Rückstellfeder
- 151: Rückstellfeder
- 152: Hülse
- 153: Hülse
- 154: Stift
- 155: Anschlag
- 156: Anschlag
- 157: Wandung
- 158: Zapfen
- 159: Ende
- 160: Anschlag
- 161: Hülse
- 162: Druckmittelkanal
- 163: Druckmittelkanal
- 164: Nachlaufraum
- 165: Nachlaufraum
- 166: Querbohrung
- 167: Querbohrung
- 168: Kolbenabschnitt
- 169: Kolbenabschnitt
- 170: Ringraum
- 171: Dichtmanschette
- 172: Ausgang
- 173: Ausgang

- A: Betätigungsrichtung
- A1: Wirkfläche
- A2: Wirkfläche
- P: Aussteuerpunkt

## Patentansprüche

1. Vorrichtung zur Bremsbetätigung (1) eines Kraftfahrzeuges umfassend
- einen Hauptzylinder (2;140) mit einem Gehäuse (4;143) und einem ersten und einem zweiten in dem Gehäuse (4;143) verschiebbar angeordneten Kolben (6,7;141,142), welcher zusammen mit dem Gehäuse (4;143) jeweils einen ersten und einen zweiten Druckraum (10,11;148,149) begrenzt, der über einen Druckmittelkanal (16,17;162,163) mit einem drucklosen Druckmittelbehälter (12) und über einen Ausgang (57,58;172,173) mit Radbremsen (59,60) verbindbar ist, und
- einen pneumatischen Bremskraftverstärker (3) mit einem Verstärkergehäuse (71), dessen Innenraum durch wenigstens eine bewegliche Wand (81,84) in wenigstens eine Unterdruckkammer (82,85) und wenigstens eine Arbeitskammer (83,86) unterteilt ist, wobei die bewegliche Wand (81,84) abhängig von einer an einer Kolbenstange (91) wirksamen Pedalkraft eine Kraft auf eine mit dem ersten Kolben (6;141) des Hauptzylinders (2;140) verbindbare Druckstange (70) überträgt, wenn die bewegliche Wand (81,84) unter der Wirkung einer zwischen den beiden Kammern (82,83,85,86) herrschenden Druckdifferenz steht,
- wobei einer der Kolben (6;141) des Hauptzylinders (2;140) gestuft mit zwei unterschiedlich großen hydraulisch wirksamen Wirkflächen (A1,A2) ausgebildet ist und eine Umschaltung der Wirkflächen (A1,A2) bei Ausfall des Bremskraftverstärkers (3) mittels einer Ventilanordnung (52) erfolgt,
**dadurch gekennzeichnet, dass**
- ein durch den gestuften Kolben (6;141) und das Gehäuse (4;143) begrenzter Ringraum (47;170) mittels der Ventilanordnung (52) entweder mit dem Druckraum (10;148), welcher dem gestuften Kolben (6;141) zugeordnet ist, oder mit einem Druckmittelbehälter (56) verbindbar ist,
- dass die Ventilanordnung (52) ein erstes und ein zweites Ventil (53,54) umfasst, welche in Abhängigkeit des Druckes der Arbeitskammer (83,86) des Bremskraftverstärkers (3) schaltbar sind,
- und dass das erste Ventil (53) in betätigter Stellung den Druckraum (10;148) mit dem Ringraum (47;170) verbindet und das zweite Ventil (54) in betätigter Stellung die Verbindung des Ringraumes (47;170) zu dem Druckmittelbehälter (56) sperrt.

2. Vorrichtung nach Anspruch 1, **dadurch gekennzeichnet, dass** das erste Ventil (53) über eine erste Druckmittelleitung (49) mit dem Druckraum (10;148) und über eine zweite Druckmittelleitung (50) mit dem Ringraum (47;170) verbunden ist und dass eine dritte Druckmittelleitung (63) vorgesehen ist, über welche der Ringraum (47;170) mit dem Druckmittelbehälter (56) verbindbar ist, wobei das zweite Ventil (54) in der dritten Druckmittelleitung (63) angeordnet ist und diese von der zweiten Druckmittelleitung (50) abzweigt.

3. Vorrichtung nach Anspruch 2, **dadurch gekennzeichnet, dass** zur Ansteuerung der Ventile (53,54) der Ventilanordnung (52) eine Unterdruckdose (55) vorgesehen ist.

4. Vorrichtung nach Anspruch 3, **dadurch gekennzeichnet, dass** die Ventilanordnung (52) sowie die Unterdruckdose (55) in einer Umschalteinheit (51) integriert vorgesehen sind.

5. Vorrichtung nach Anspruch 4, **dadurch gekennzeichnet, dass** die Umschalteinheit (51) am Hauptzylinder (2;140) befestigbar ist.

6. Vorrichtung nach Anspruch 4, **dadurch gekennzeichnet, dass** die Umschalteinheit (51) als separates Bauteil im Motorraum befestigbar ist.

7. Vorrichtung nach Anspruch 5 oder 6, **dadurch gekennzeichnet, dass** die Ventile (53,54) in der Umschalteinheit (51) übereinander angeordnet vorgesehen sind.

8. Vorrichtung nach Anspruch 7, **dadurch gekennzeichnet, dass** die Umschalteinheit (51) einen ersten und einen zweiten Gehäuseabschnitt (111,112) aufweist, wobei die Unterdruckdose (55) in den ersten Gehäuseabschnitt (111) integriert vorgesehen ist und die Ventile (53,54) der Ventilanordnung (52) in dem zweiten Gehäuseabschnitt (112) angeordnet sind, und dass die Unterdruckdose (55) eine federvorgespannte Membran (113) aufweist, welche den ersten Gehäuseabschnitt (111) in eine Atmosphärenkammer (116) sowie eine Unterdruckkammer (117) unterteilt.

9. Vorrichtung nach Anspruch 8, **dadurch gekennzeichnet, dass** die Membran (113) in einer Wandung (118) des ersten Gehäuseabschnittes (111) sowie in einen Kolben (119) eingespannt vorgesehen ist, dass die Ventilanordnung (52) einen ersten, formschlüssig mit dem Kolben (119) der Unterdruckdose (55) verbunden Betätigungsstößel (122) für das zweite Ventil (54) und einen zweiten, im Kraftfluss nachgeschalteten Betätigungsstößel (123) des ersten Ventils (53) aufweist, wobei an dem ersten Betätigungsstößel (122) ein Ventilkörper (124) des zweiten Ventils (54) befestigt ist und ein Vorsprung (135) des zweiten Betätigungsstößels (123) den Ventilkörper des ersten Ventils (53) bildet, und dass Ventilsitze (125,126) der Ventile (53,54) in Ausnehmungen (127,128) des zweiten Gehäuseabschnittes (112) angeordnet sind.

10. Vorrichtung nach einem der vorangegangenen Ansprüche 1 bis 9, **dadurch gekennzeichnet, dass** der Hauptzylinder (2) als Zentralventil-Tandemhauptzylinder ausgebildet ist.

11. Vorrichtung nach einem der vorangegangenen Ansprüche 1 bis 9, **dadurch gekennzeichnet, dass** der Hauptzylinder (140) in Plunger-Bauweise ausgebildet ist.

12. Verfahren zur Wirkflächenänderung einer Vorrichtung zur Bremsbetätigung (1) nach einem der Ansprüche 1 bis 11, **dadurch gekennzeichnet, dass** die Umschaltung der Wirkflächen (A1,A2) in Abhängigkeit des Druckes der Arbeitskammer (83,86) des Bremskraftverstärkers (3) erfolgt.

13. Verfahren nach Anspruch 11, **dadurch gekennzeichnet, dass** das Schalten der Ventilanordnung (52) mittels einer Unterdruckdose (55) erfolgt.

## Claims

1. Device for brake actuation (1) in a motor vehicle, comprising
- a master cylinder (2;140) having a housing (4;143) and having a first and a second piston (6,7;141,142) which are arranged in a movable fashion in the housing (4;143) and which, together with the housing (4;143), delimit in each case a first and a second pressure chamber (10,11;148,149) which can be connected by means of a pressure medium duct (16,17;162,163) to an unpressurized pressure medium tank (12) and by means of an outlet (57,58;172,173) to wheel brakes (59,60), and
- a pneumatic brake booster (3) having a booster housing (71) whose interior space is divided by at least one movable wall (81,84) into at least one vacuum chamber (82,85) and at least one working chamber (83,86), with the movable wall (81,84) transmitting a force, as a function of a pedal force which acts on a piston rod (91), to a pressure rod (70), which can be connected to the first piston (6;141) of the master cylinder (2;140), when the movable wall (81,84) is under the action of a pressure difference prevailing between the two chambers (82,83,85,86),
- with one of the pistons (6;141) of the master cylinder (2;140) being of stepped design with two hydraulically acting effective surfaces (A1,A2) of different sizes, and with a switch between the effective surfaces (A1,A2) taking place in the event of failure of the brake booster (3) by means of a valve arrangement (52),
**characterized in that**
- an annular chamber (47;170) which is delimited by the stepped piston (6;141) and the housing (4;143) can be connected by means of the valve arrangement (52) either to that pressure chamber (10;148) which is assigned to the stepped piston (6;141), or to a pressure medium tank (56),
- **in that** the valve arrangement (52) comprises a first and a second valve (53,54) which can be switched as a function of the pressure of the working chamber (83,86) of the brake booster (3),
- and **in that** the first valve (53), in the actuated position, connects the pressure chamber (10;148) to the annular chamber (47;170), and the second valve (54), in the actuated position, blocks the connection of the annular chamber (47;170) to the pressure medium tank (56).

2. Device according to Claim 1, **characterized in that** the first valve (53) is connected by means of a first pressure medium line (49) to the pressure chamber (10;148) and by means of a second pressure medium line (50) to the annular chamber (47;170), and **in that** a third pressure medium line (63) is provided, by means of which the annular chamber (47;170) can be connected to the pressure medium tank (56), with the second valve (54) being arranged in the third pressure medium line (63) and with said third pressure medium line (63) branching off from the second pressure medium line (50).

3. Device according to Claim 2, **characterized in that** a vacuum cell (55) is provided to activate the valves (53,54) of the valve arrangement (52).

4. Device according to Claim 3, **characterized in that** the valve arrangement (52) and the vacuum cell (55) are provided so as to be integrated in a switching unit (51).

5. Device according to Claim 4, **characterized in that** the switching unit (51) can be fastened to the master cylinder (2;140).

6. Device according to Claim 4, **characterized in that** the switching unit (51) can be fastened as a separate component in the engine compartment.

7. Device according to Claim 5 or 6, **characterized in that** the valves (53,54) in the switching unit (51) are provided so as to be arranged one above the other.

8. Device according to Claim 7, **characterized in that** the switching unit (51) has a first and a second housing section (111,112), with the vacuum cell (55) being provided so as to be integrated in the first housing section (111), and the valves (53,54) of the valve arrangement (52) being arranged in the second housing section (112), and **in that** the vacuum cell (55) has a spring-preloaded diaphragm (113) which divides the first housing section (111) into an atmosphere chamber (116) and a vacuum chamber (117).

9. Device according to Claim 8, **characterized in that** the diaphragm (113) is provided so as to be braced in a wall (118) of the first housing section (111) and in a piston (119), **in that** the valve arrangement (52) has a first actuating plunger (122), which is connected in a form-fitting manner to the piston (119) of the vacuum cell (55), for the second valve (54), and a second actuating plunger (123), which is connected downstream in the force flow, of the first valve (53), with a valve body (124) of the second valve (54) being fastened to the first actuating plunger (122) and with a projection (135) of the second actuating plunger (123) forming the valve body of the first valve (53), and **in that** valve seats (125,126) of the valves (53,54) are arranged in recesses (127,128) of the second housing section (112).

10. Device according to one of the preceding Claims 1 to 9, **characterized in that** the master cylinder (2) is designed as a central valve tandem master cylinder.

11. Device according to one of the preceding Claims 1 to 9, **characterized in that** the master cylinder (140) is of plunger-type design.

12. Method for changing the effective surface of a device for brake actuation (1) according to one of Claims 1 to 11, **characterized in that** the switch between the effective surfaces (A1,A2) takes place as a function of the pressure of the working chamber (83,86) of the brake booster (3).

13. Method according to Claim 11, **characterized in that** the switching of the valve arrangement (52) takes place by means of a vacuum cell (55).

## Revendications

1. Dispositif d'actionnement des freins (1) d'un véhicule automobile, comprenant :
un maître-cylindre (2 ; 140) avec un boîtier (4 ; 143) et un premier et un deuxième piston (6, 7 ; 141, 142) disposés de manière coulissante dans le boîtier (4 ; 143), qui délimitent chacun un premier et un deuxième espace de pression (10, 11 ; 148, 149), lesquels peuvent être connectés par le biais d'un canal de fluide de pression (16, 17 ; 162, 163) à un récipient de fluide de pression sans pression (12) et par le biais d'une sortie (57, 58 ; 172, 173) à des freins de roue (59, 60), et
un amplificateur de force de freinage pneumatique (3) avec un boîtier d'amplificateur (71), dont l'espace interne est divisé par au moins une paroi mobile (81, 84) en au moins une chambre de dépression (82, 85) et au moins une chambre de travail (83, 86), la paroi mobile (81, 84) transmettant, en fonction d'une force de pédale agissant sur une tige de piston (91), une force à une tige de pression (70) pouvant être connectée au premier piston (6 ; 141) du maître-cylindre (2 ; 140), lorsque la paroi mobile (81, 84) est soumise à l'effet de la différence de pression régnant entre les deux chambres (82, 83, 85, 86), l'un des pistons (6 ; 141) du maître-cylindre (2 ; 140) étant réalisé avec un étagement avec deux surfaces fonctionnelles (A1, A2) à effet hydraulique et de dimensions différentes, et une inversion des surfaces fonctionnelles (A1, A2) ayant lieu au moyen d'un agencement de soupape (52) en cas de panne de l'amplificateur de force de freinage (3),
**caractérisé**
**en ce qu'**un espace annulaire (47 ; 170) limité par le piston étagé (6 ; 141) et le boîtier (4 ; 143) peut être connecté au moyen de l'agencement de soupape (52) soit à l'espace de pression (10 ; 148), qui est associé au piston étagé (6 ; 141), soit à un récipient de fluide de pression (56),
**en ce que** l'agencement de soupape (52) comprend une première et une deuxième soupape (53, 54) qui peuvent être commutées en fonction de la pression de la chambre de travail (83, 86) de l'amplificateur de force de freinage (3),
et **en ce que** la première soupape (53), dans la position activée, relie l'espace de pression (10 ; 148) à l'espace annulaire (47 ; 170) et la deuxième soupape (54), dans la position activée, bloque la connexion de l'espace annulaire (47 ; 170) au récipient de fluide de pression (56).

2. Dispositif selon la revendication 1, **caractérisé en ce que** la première soupape (53) est connectée par le biais d'une première conduite de fluide de pression (49) à l'espace de pression (10 ; 148) et par le biais d'une deuxième conduite de fluide de pression (50) à l'espace annulaire (47 ; 170), et **en ce qu'**une troisième conduite de fluide de pression (63) est prévue, par le biais de laquelle l'espace annulaire (47 ; 170) peut être connecté au récipient de fluide de pression (56), la deuxième soupape (54) étant disposée dans la troisième conduite de fluide de pression (63) et celle-ci partant de la deuxième conduite de fluide de pression (50).

3. Dispositif selon la revendication 2, **caractérisé en ce que** pour commander les soupapes (53, 54) de l'agencement de soupape (52), on prévoit une chambre à dépression (55).

4. Dispositif selon la revendication 3, **caractérisé en ce que** l'agencement de soupape (52) ainsi que la chambre à dépression (55) sont prévus sous forme intégrée dans une unité d'inversion (51).

5. Dispositif selon la revendication 4, **caractérisé en ce que** l'unité d'inversion (51) peut être fixée au maître-cylindre (2 ; 140).

6. Dispositif selon la revendication 4, **caractérisé en ce que** l'unité d'inversion (51) peut être fixée en tant que composant séparé dans le compartiment moteur.

7. Dispositif selon la revendication 5 ou 6,
**caractérisé en ce que** les soupapes (53, 54) sont prévues de manière superposées dans l'unité d'inversion (51).

8. Dispositif selon la revendication 7, **caractérisé en ce que** l'unité d'inversion (51) présente une première et une deuxième portion de boîtier (111, 112), la chambre à dépression (55) étant prévue sous forme intégrée dans la première portion de boîtier (111) et les soupapes (53, 54) de l'agencement de soupape (52) étant disposées dans la deuxième portion de boîtier (112) et **en ce que** la chambre à dépression (55) présente une membrane (113) précontrainte par ressort, qui divise la première portion de boîtier (111) en une chambre atmosphérique (116) et en une chambre de dépression (117).

9. Dispositif selon la revendication 8, **caractérisé en ce que** la membrane (113) est serrée dans une paroi (118) de la première portion de boîtier (111) ainsi que dans un piston (119), **en ce que** l'agencement de soupape (52) présente un premier poussoir d'actionnement (122) pour la deuxième soupape (54) connecté par engagement par coopération de forme au piston (119) de la chambre à dépression (55) et un deuxième poussoir d'actionnement (123) de la première soupape (53) monté en aval dans le flux de force, un corps de soupape (124) de la deuxième soupape (54) étant fixé sur le premier poussoir d'actionnement (122), et une saillie (135) du deuxième poussoir d'actionnement (123) formant le corps de soupape de la première soupape (53), et **en ce que** des sièges de soupape (125, 126) des soupapes (53, 54) sont disposés dans des évidements (127, 128) de la deuxième portion de boîtier (112).

10. Dispositif selon l'une quelconque des revendications précédentes 1 à 9, **caractérisé en ce que** le maître-cylindre (2) est réalisé sous forme de maître-cylindre tandem à soupape centrale.

11. Dispositif selon l'une quelconque des revendications précédentes 1 à 9, **caractérisé en ce que** le maître-cylindre (140) est réalisé sous forme de plongeur.

12. Procédé de modification de la surface fonctionnelle d'un dispositif pour l'actionnement d'un frein (1) selon l'une quelconque des revendications 1 à 11, **caractérisé en ce que** l'inversion des surfaces fonctionnelles (A1, A2) s'effectue en fonction de la pression de la chambre de travail (83, 86) de l'amplificateur de la force de freinage (3).

13. Procédé selon la revendication 11, **caractérisé en ce que** la commutation de l'agencement de soupape (52) s'effectue au moyen d'une chambre à dépression (55).
